(19) Europäisches Patentamt
European Patent Office
Office européen des brevets

(11) EP 0 771 901 B1

(12) FASCICULE DE BREVET EUROPEEN

(45) Date de publication et mention de la délivrance du brevet:
**28.08.2002 Bulletin 2002/35**

(51) Int Cl.$^7$: **D06N 3/12**, C09D 183/04, B65G 15/32

(21) Numéro de dépôt: **96420320.2**

(22) Date de dépôt: **30.10.1996**

# (54) Utilisation d'une composition organopolysiloxanique pour obtenir une bande transporteuse

Verwendung einer Silikonzusammensetung zur Herstellung von Transportbändern

Use of an organopolysiloxane composition for conveyor belts

(84) Etats contractants désignés:
**AT BE CH DE DK ES FI FR GB GR IE IT LI LU NL PT SE**

(30) Priorité: **31.10.1995 FR 9513108**

(43) Date de publication de la demande:
**07.05.1997 Bulletin 1997/19**

(73) Titulaire: **RHODIA CHIMIE**
**92408 Courbevoie Cédex (FR)**

(72) Inventeurs:
- **Lorenzetti, Dominique**
  **69300 Caluire (FR)**
- **Peccoux, Pierre-Michel**
  **69003 Lyon (FR)**
- **Kaiser, Uwe**
  **25436 Moorrege (DE)**

(74) Mandataire: **Trolliet, Maurice et al**
**Rhodia Services,**
**Direction de la Propriété Industrielle,**
**40, rue de la Haie-Coq**
**93306 Aubervilliers Cedex (FR)**

(56) Documents cités:
**EP-A- 0 586 216**
**EP-A- 0 646 672**
**EP-A- 0 668 325**
**DE-A- 2 825 114**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 771 901 B1

Printed by Jouve, 75001 PARIS (FR)

## Description

La présente invention se situe dans le domaine du revêtement des bandes transporteuses notamment à usage alimentaire et concerne l'utilisation d'une composition organopolysiloxanique permettant d'obtenir un revêtement en élastomère silicone approprié. Elle concerne aussi les bandes transporteuses ainsi obtenues.

Ces bandes transporteuses sont en général constituées d'un support textile revêtu d'une matière élastomère appropriée, éventuellement acceptable dans un contexte alimentaire.

La difficulté est de trouver des compositions permettant l'obtention d'un enduit en matière élastomère ayant les qualités d'adhérence, de dureté, de résistance à la déchirure et de résistance à la traction et à l'allongement, toutes qualités requises dans ce domaine, et de préférence en même temps acceptable pour le contact alimentaire.

Les élastomères de silicone ont déja été proposés pour l'enduction de matières textiles dans des applications différentes. Les compositions silicones classiques génératrices d'élastomères souffrent cependant d'une aptitude à l'adhérence insuffisante, si bien que s'est développée l'incorporation à ces compositions de promoteurs d'adhérence pour éviter l'emploi d'une sous-couche d'adhérence (en anglais "primer").

On a ainsi proposé de nombreux promoteurs ou associations promotrices d'adhérence : silanes époxydés (US-A-5 248 715, EP-A-0 553 840, EP-A-0 493 791, EP-A-0 350 951, US-A-4 087 585, EP-A-0 596 534 et GB-A-2 270 522), association d'un silane époxydé et d'un polysilicate (US-A-5 364 921), d'un silane méthacrylique (JP 5140459) ou d'un silane vinylique (EP-A-0 451 946, US-A-5 270 425, EP-A-0 326 712), une association d'un hydrogénosilane et d'un alkylsilane (JP 94/0889256), un alcoxysilane (EP-A-0 345 965), un aminosilane (US-A-4 810 768), le produit de l'hydrolyse entre un organopolysiloxane insaturé, un tétraalcoxysilane et un alcoxysilane (EP-A-0 254 298), dans le domaine de l'isolement électrique un alcoxysilane insaturé (US-A-4 311 739, US-A-4 196 273, EP-A-0 245 948), éventuellement associé à un silane méthacrylique (DE-A-2 900 162). La plupart de ces promoteurs peuvent être utilisés avec un catalyseur d'hydrolyse/condensation, notamment un titanate, et éventuellement sous forme préhydrolysée. La demande EP-A-0 226 934 propose l'association d'une matière organosiliciée ayant des groupes diorganovinylsiloxy, triorganosiloxy, $SiO_{4/2}$ et alcoxy et d'un silane à groupement glycidoxy ou époxycyclohexyl. La demande EP-A-0 586 216 propose aussi, pour l'enduction de substrats organiques ou métalliques, un silane insaturé qui est un organosilane ayant au moins un radical alcényle lié à un atome de silicium et ayant au moins 5 atomes de carbone et au moins un groupe alcoxy lié au silicium. Cette demande prévoit d'associer éventuellement au silane insaturé un catalyseur destiné à faciliter la réaction d'hydrolyse/condensation du silane ainsi que la réaction entre les groupes alkoxy et autres du silane et ceux présents à la surface du substrat lors de la réaction de réticulation. Le catalyseur peut être un titanate de tétraalkyle tel que le titanate de tétra n-butyle ou un chélate métallique. Il est présent en quantité catalytique de 0,1 à 1 % en poids par rapport à la composition organosiloxanique.

La présente invention a pour objectif de fournir des compositions silicones conduisant par réticulation à un élastomère ayant les qualités requises pour l'application aux bandes transporteuses, à savoir notamment adhérence, dureté, résistance à la déchirure, résistance à la traction et à l'allongement et en même temps acceptable en usage alimentaire.

La demanderesse a trouvé qu'il était possible de répondre à l'objectif de l'invention en choisissant une composition organopolysiloxanique du type vulcanisable par polyaddition à froid ou à chaud et un système promoteur d'adhérence qui est un organosilane alcoxylé contenant, par molécule, au moins un groupe hydrocarboné en $C_2$ à $C_{12}$, notamment en $C_2$ à $C_8$, comportant une double liaison éthyléniquement insaturée et éventuellement un ou plusieurs atomes d'oxygène. On pourra éventuellement lui associer un chélate de métal M et/ou un alcoxyde métallique de formule générale : $M(OJ)_n$, avec n = valence de M et J = alkyle linéaire ou ramifié en $C_1$-$C_8$, M étant choisi dans le groupe formé par Ti, Zr, Ge, Li, Mn, Fe, Al et Mg. Ce composé, connu pour catalyser l'organosilane alcoxylé, sera ici utilisé en quantité supracatalytique. Le système promoteur d'adhérence s'intègre au réseau élastomère et rend la composition autoadhérente sur la matière textile qui forme l'âme de la bande transporteuse. La demanderesse a constaté que l'élastomère réticulé ne libère pas ses constituants, en particulier le promoteur, si bien qu'il est utilisable en usage alimentaire.

La demanderesse a trouvé que les silanes allyliques et (méth)acryloxy éventuellement associés au titanate de n-butyle répondaient particulièrement bien à ces besoins.

La présente invention a donc pour objet l'utilisation, pour l'enduction d'une bande transporteuse, utilisable notamment pour le contact alimentaire, d'une composition polyorganosiloxanique du type de celles vulcanisables à froid ou à chaud par polyaddition, consistant dans le mélange formé de :

(I) au moins un polyorganosiloxane présentant, par molécule, au moins deux groupes alcényles, en $C_2$-$C_6$ liés au silicium,

(II) au moins un polyorganohydrogénosiloxane (réticulant) présentant, par molécule, au moins trois motifs siloxyles porteurs d'un atome d'hydrogène lié au silicium,

(III) une quantité catalytiquement efficace d'au moins un catalyseur, composé d'au moins un métal appartenant

au groupe du platine,

(IV) un système promoteur d'adhérence, constitué par (IV.1) au moins un organosilane alcoxylé contenant, par molécule, au moins un groupe hydrocarboné en $C_2$ à $C_{12}$, notamment en $C_2$ à $C_8$, comportant une double liaison éthyléniquement insaturée et optionnellement un ou plusieurs atomes d'oxygène, et éventuellement par (IV.2) au moins un chélate de métal M et/ou un alcoxyde métallique de formule générale : $M(OJ)_n$, avec n = valence de M et J = alkyle linéaire ou ramifié en $C_1$-$C_8$, M étant choisi dans le groupe formé par : Ti, Zr, Ge, Li, Mn, Fe, Al, Mg,

(V) éventuellement une charge minérale,

(VI) éventuellement au moins un modulateur de réticulation,

(VII) éventuellement au moins une résine polyorganosiloxane, non hydroxylée et porteuse de groupements alcényles en $C_2$-$C_6$ liés au silicium ou d'atomes d'hydrogène liés au silicium, et

(VIII) éventuellement au moins un polyorganosiloxane allongeant présentant, par molécule, deux groupements siloxyles porteurs d'un atome d'hydrogène lié au silicium.

Conformément à une disposition préférée de l'invention, l'organosilane alcoxylé du système promoteur (IV) est plus particulièrement sélectionné parmi les produits de formule générale suivante:

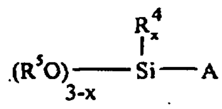 (1)

dans laquelle :

- A est soit

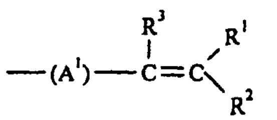

où $A^1$ est un lien valenciel ou un alkylène linéaire ou ramifié en $C_1$-$C_6$, soit

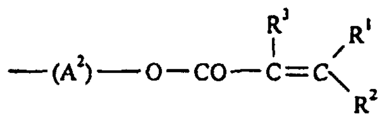

où $A^2$ est un alkylène linéaire ou ramifié en $C_1$-$C_6$, formules dans lesquelles

  - $R^1$, $R^2$, $R^3$ sont des radicaux hydrogénés ou hydrocarbonés identiques ou différents et représentent, de préférence, l'hydrogène, un alkyle linéaire ou ramifié en $C_1$-$C_4$ ou un phényle éventuellement substitué par au moins un alkyle en $C_1$-$C_3$,
  - $R^4$ et $R^5$ sont des radicaux identiques ou différents et représentent un alkyle en $C_1$-$C_4$ linéaire ou ramifié,
  - x = 0 à 2, de préférence 0 ou 1 et plus préférentiellement encore 0.

Ce produit peut être pris sous cette forme ou sous une forme partiellement hydrolysée.

De façon préférentielle :

- $A^1$ est $-(CH_2)-$ avec $R^1$, $R^2$ et $R^3$ représentant un atome d'hydrogène
- $A^2$ est $-(CH_2)_3-$ avec $R^1$ et $R^2$ représentant un atome d'hydrogène et $R^3$ un groupe $CH_3$.

De manière plus préférée encore, on choisit, parmi les deux propositions précédentes, la deuxième.

En ce qui concerne les chélates et/ou alcoxydes métalliques, les produits préférés sont ceux dans lesquels le métal M est choisi dans la liste suivante : Ti, Zr, Ge, Al. Il est à souligner que le titane est plus particulièrement préféré. On peut lui associer, par exemple, un radical alkyle de type butyle comme le n-butyle.

Sur le plan pondéral, le promoteur de type (IV.1) est présent dans une concentration comprise entre 0,1 et 5

% en poids par rapport à l'ensemble des constituants de la composition, de préférence entre 0,2 et 2 % en poids. Le promoteur de type (IV.2), quand on en utilise un à côté du promoteur de type (IV.1), est présent dans une concentration comprise entre 0,1 et 2 % en poids par rapport à la même référence, de préférence entre 0,2 et 1 %.

Les polyorganosiloxanes (I) et les polyorganohydrogénosiloxanes (II), constituants principaux de compositions selon l'invention, sont constitués de motifs siloxyles de formule générale :

$$Z_xR_ySiO_{\frac{(4-x+y)}{2}} \qquad (2)$$

éventuellement tous les autres motifs étant des motifs siloxyles de formule moyenne :

$$R_nSiO_{\frac{4-n}{2}} \qquad (3)$$

formules dans lesquelles les divers symboles ont la signification suivante :

- les symboles R, identiques ou différents, représentent chacun un groupement de nature hydrocarbonée non hydrolysable, ce radical pouvant être :
  * un radical alkyle, halogènoalkyle ayant de 1 à 5 atomes de carbone et comportant de 1 à 6 atomes de chlore et/ou de fluor,
  * des radicaux cycloalkyles et halogènocycloalkyles ayant de 3 à 8 atomes de carbone et contenant de 1 à 4 atomes de chlore et/ou de fluor,
  * des radicaux aryles, alkylaryles et halogènoaryles ayant de 6 à 8 atomes de carbone et contenant de 1 à 4 atomes de chlore et/ou de fluor,
  * des radicaux cyanoalkyles ayant de 3 à 4 atomes de carbone ;
- les symboles Z représentent un atome d'hydrogène (composé II) ou un groupement alcényle en $C_2$-$C_6$ (composé I) ;
- x = un nombre entier égal à 1 ou 2 ;
- y = un nombre entier égal à 0, 1 ou 2 ;
- la somme x + y est comprise entre 1 et 3 ;
- n = un nombre entier égal à 0, 1, 2 ou 3.

A titre illustratif, on peut citer les radicaux organiques R, directement liés aux atomes de silicium : les groupes méthyles ; éthyle ; propyle ; isopropyle ; butyle ; isobutyle ; n-pentyle ; t-butyle ; chlorométhyle ; dichlorométhyle : α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle ; p-chlorophényle ; m-chlorophényle ; dichloro-3,5 phényle ; trichlorophényle ; tétrachlorophényle ; o-, p-, ou m-tolyle ; α,α,α-trifluorotolyle ; xylyles comme diméthyl-2,3 phényle, diméthyl-3,4 phényle.

Préférentiellement, les radicaux organiques R liés aux atomes de silicium sont des radicaux méthyle, éthyle, propyle et phényle, ces radicaux pouvant être éventuellement halogénés.

Dans le cas du composé (I), les symboles Z sont de préférence des groupements vinyles.

Les compositions organopolysiloxanes bicomposantes ou monocomposantes réticulant à température ambiante ou à la chaleur par des réactions de polyaddition, essentiellement par réaction de groupements hydrogénosilylés sur des groupements alkényl-silylés, en présence généralement d'un catalyseur métallique, de préférence au platine, sont décrites par exemple dans les brevets US-A-3 220 972, 3 284 406, 3 436 366, 3 697 473 et 4 340 709. Les organopolysiloxanes entrant dans ces compositions sont donc constitués par des couples à base d'une part d'au moins un polysiloxane linéaire, ramifié ou cyclique (I), constitué de motif(s) (2) dans lesquels le reste Z représente un groupement alkényle en $C_2$-$C_6$ éventuellement associés à des motifs (3), et d'autre part d'au moins un hydrogénopolysiloxane (II) linéaire, ramifié ou cyclique, constitué de motifs (2) dans lesquels le reste Z représente alors un atome d'hydrogène, éventuellement associés à des motifs (3).

Des exemples de motifs siloxyles de formule (2) où Z = alkényle sont : les motifs vinyldiméthylsiloxyle, vinylphénylsiloxyle, vinylsiloxyle et vinylméthylsiloxyle.

Des exemples de motifs siloxyles de formule (2) où Z = H sont : les motifs $H(CH_3)_2SiO_{1/2}$, $HCH_3SiO_{2/2}$ et $H(C_6H_5)SiO_{2/2}$.

Des exemples de motifs siloxyles de formule (3) sont : les motifs $SiO_{4/2}$, triméthylsiloxyle, diméthylsiloxyle, méthylphénylsiloxyle, diphénylsiloxyle, méthylsiloxyle et phénylsiloxyle.

Des exemples de polyorganosiloxanes (I) sont : les diméthylpolysiloxanes à extrémités diméthylvinylsiloxyle, les copolymères méthylvinyldiméthylpolysiloxanes à extrémités triméthylsiloxyle, les copolymères méthylvinyldiméthylpolysiloxanes à extrémités diméthylvinylsiloxyle, les méthylvinylpolysiloxanes à extrémités diméthylvinylsiloxyle, les méthylvinylpolysiloxanes cycliques.

Des exemples de polyorganosiloxanes (II) sont : les copolymères diméthylhydrogénométhylpolysiloxanes à extrémités triméthylsiloxyle, les copolymères diméthylhydrogénométhylpolysiloxanes à extrémités hydrogénodiméthylsiloxyle, les hydrogénométhylpolysiloxanes à extrémités hydrogénodiméthylsiloxyle ou à extrémités triméthylsiloxyle, les hydrogénométhylpolysiloxanes cycliques, tous ces composés ayant par molécule au moins trois motifs siloxyles porteurs d'un atome d'hydrogène lié au silicium.

Les composés (I) possèdent généralement une viscosité dynamique à 25°C inférieure à 500 000 mPa.s et de préférence comprise entre 100 et 100 000 mPa.s. Les composés (II) possèdent généralement une viscosité dynamique à 25°C inférieure à 10 000 mPa.s et de préférence comprise entre 5 et 1000 mPa.s.

Des composés (I) et (II) qui conviennent particulièrement bien sont des polyorganosiloxanes essentiellement linéaires, ayant des viscosités telles que celles définies ci-avant, consistant :

- pour les composés (I) : dans des huiles diméthylpolysiloxanes $\alpha,\omega$-divinylées, et
- pour les composés (II) : dans des huiles hydrogénométhylpolysiloxanes à extrémités hydrogénodiméthylsiloxyle ou à extrémités triméthylsiloxyle.

De manière pratique et usuelle, chaque composé (I) et (II) peut être formé par des mélanges d'huiles ayant des caractéristiques différentes.

S'agissant des polyorganosiloxanes allongeants (VIII), dont l'emploi correspond à une modalité préférée de mise en oeuvre, ils répondent globalement aux mêmes définitions que celles données ci-avant à propos des composés (II), sauf en ce qui concerne le nombre de fonctions ≡Si-H par molécule dudit composé (VIII), nombre qui doit être strictement égal à 2. Les composés (VIII), quand on les utilise, se présentent généralement sous la forme de polyorganosiloxanes ayant une viscosité dynamique à 25°C inférieure à 100 000 mPa.s, de préférence comprise entre 5 et 1000 mPa.s et plus préférentiellement encore comprise entre 10 et 100 mPa.s. Les composés (VIII) qui conviennent particulièrement bien sont des polyorganosiloxanes essentiellement linéaires, ayant des viscosités telles que celles définies juste ci-avant et consistant dans des huiles diméthylpolysiloxanes $\alpha,\omega$-dihydrogéno.

Du point de vue des quantités, l'ensemble des composés réactifs (I), (II) et éventuellement (VIII) est ajusté de préférence de façon que :

- le rapport nombre de moles de fonctions Si-H apportées par (II) et éventuellement (VIII) sur le nombre de moles de fonctions alcényles apportées par (I) est compris entre 0,8 et 4 et de préférence entre 1 et 2,
- et, quand on utilise un composé (VIII), le rapport nombre de moles de fonctions Si-H apportées par (VIII) sur le nombre de moles de fonctions Si-H apportées par (II) est au plus égal à 10 et de préférence compris entre 0,5 et 5.

En outre, ces compositions peuvent aussi comporter des résines silicones (VII) non hydroxylées qui sont des polymères organopolysiloxanes ramifiés bien connus. Ces résines présentent, par molécule, au moins deux motifs différents choisis parmi ceux de formule $R_3SiO_{0,5}$ (motif M), $R_2SiO$ (motif D), $RSiO_{1,5}$ (motif T) et $SiO_2$ (motif Q), l'un au moins de ces motifs étant un motif T ou Q. Les radicaux R sont au moins pour partie des restes alcényles, de préférence vinyles ou des atomes d'hydrogène (teneur en Vi ou en fonctions Si-H notamment comprise entre 5 et 50 meq Vi ou H/100g). Ces fonctions vinylées ou hydrogéno sont portées par les motifs M, D ou T. Comme exemples, on peut citer des résines MDQ vinylées ou MDQ hydrogéno.

Les radicaux R qui ne sont pas des restes vinyles ou des atomes d'hydrogène peuvent être des radicaux alkyles linéaires ou ramifiés, phényl, trifluoro-3,3,3 propyle. De préférence, les radicaux alkyles présentent de 1 à 6 atomes de carbone. Plus particulièrement, on peut citer comme radicaux R alkyles les radicaux méthyle, éthyle, isopropyle, tertiobutyle et n-héxyle.

Ce composé VII a pour fonction d'accroître la résistance mécanique du revêtement élastomère silicone. Cette résine de structure, quant on en utilise une, est présente dans une concentration comprise entre 5 et 50 % en poids par rapport à l'ensemble des constituants de la composition, de préférence entre 10 et 30 % en poids.

Les catalyseurs (III) sont bien connus. On utilise, de préférence, les composés du platine et du rhodium. On peut, en particulier, utiliser les complexes du platine et d'un produit organique décrits dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (III), calculée en poids de platine-métal, est généralement comprise entre 2 et 400 ppm, de préférence entre 5 et 100 ppm basés sur le poids total des polyorganosiloxanes (I), (II) et éventuellement (VIII).

La charge (V) éventuellement prévue est de préférence minérale. Elle peut être constituée par des produits choisis parmi les matières siliceuses (ou non).
S'agissant des matières siliceuses, elles peuvent jouer le rôle de charge renforçante ou semi-renforçante.
Les charges siliceuses renforçantes sont choisies parmi les silices colloïdales, les poudres de silice de combustion et de précipitation ou leur mélange.
Ces poudres présentent une taille moyenne de particule généralement inférieure à 0,1 μm et une surface spécifique BET supérieure à 50 $m^2$/g, de préférence comprise entre 100 et 350 $m^2$/g.
Les silices peuvent être incorporées telles quelles, puis éventuellement être traitées par un ou des composés organosiliciques habituellement utilisés pour cet usage. Ces silices peuvent aussi être incorporées après un traitement par un tel composé organosilicique. Parmi ces composés, figurent les méthylpolysiloxanes tels que l'hexaméthyldisiloxane, l'octaméthylcyclotétrasiloxane, les méthylpolysilazanes tels que l'hexaméthyldisilazane, l'hexaméthylcyclotrisilazane, les chlorosilanes tels que le diméthyldichlorosilane, le triméthylchlorosilane, le méthylvinyldichlorosilane, le diméthylvinylchlorosilane, les alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %.
Les charges siliceuses semi-renforçantes telles que des terres de diatomées, du quartz broyé ou des oxydes mixtes de silicium (et par exemple de zirconium) broyés, peuvent être également employées.
En ce qui concerne les matières minérales non siliceuses, elles peuvent intervenir comme charge minérale semi-renforçante, charge de bourrage ou charge spécifique. Des exemples de ces charges non siliceuses seules ou en mélange sont l'hydroxyde d'aluminium, le noir de carbone, le dioxyde de titane, l'oxyde d'aluminium, l'oxyde de cérium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 μm et une surface BET inférieure à 100 $m^2$/g.
De manière pratique, on préfère mettre en oeuvre une composition chargée. Dans le cadre de cette modalité préférée, la charge employée est préférentiellement une silice ou un mélange de quartz et de silice, avec éventuellement de l'hydroxyde d'aluminium ou analogue.
Le cas échéant, sur le plan pondéral, on préfère mettre en oeuvre une quantité de charge comprise entre 10 et 60, de préférence entre 20 et 40 % en poids par rapport à l'ensemble des constituants de la composition.
Avantageusement, la composition élastomère silicone comprend au moins un modulateur (VI) de la réaction d'addition (ralentisseur ou inhibiteur de réticulation), choisi parmi les composés suivants :

- polyorganosiloxanes, avantageusement substitués par au moins un alcényle, le tétraméthyltétravinylcyclotétrasiloxane ou le divinyltétraméthyldisiloxane étant particulièrement préférés,
- la pyridine,
- les phosphines et les phosphites organiques,
- les amides insaturés,
- les maléates alkylés,
- et les alcools acétyléniques,

Ces alcools acétyléniques, (voir brevets FR-A-1 528 464 et FR-A-2 372 874), qui font partie des bloqueurs thermiques de réaction d'hydrosilylation préférés, ont pour formule :

$$R\text{-}(R')C(OH)\text{-}C{=}CH$$

formule dans laquelle,

* R est un radical alkyle linéaire ou ramifié, ou un radical phényle ;
* R' est H ou un radical alkyle linéaire ou ramifié, ou un radical phényle ;

les radicaux R, R' et l'atome de carbone situé en $\alpha$ de la triple liaison pouvant éventuellement former un cycle ;
le nombre total d'atomes de carbone contenu dans R et R' étant d'au moins 5, de préférence de 9 à 20.
Lesdits alcools sont, de préférence, choisis parmi ceux présentant un point d'ébullition supérieur à 100°C. On peut citer à titre d'exemples :

. L'éthylnyl-1-cyclohexanol 1 ;
. Le méthyl-3 dodécyne-1 ol-3 ;
. Le triméthyl-3,7,11 dodécyne-1 ol-3 ;
. Le diphényl-1,1 propyne-2 ol-1 ;

. L'éthyl-3 éthyl-6 nonyle-1 ol-3 ;
. Le méthyl-3 pentadécyne-1 ol-3 ;

Ces alcools α-acétyléniques sont des produits du commerce.
Un tel modulateur (VI) est présent en général à raison de 3 000 ppm au maximum, de préférence à raison de 100 à 2000 ppm par rapport au poids total des organopolysiloxanes (I), (II) et éventuellement (VIII).
De manière connue en soi, la composition élastomère silicone peut être additionnée de divers additifs classiques comme par exemple les pigments.
Avantageusement, la composition de l'invention présente une viscosité comprise entre 100 et 500 000, de préférence entre 5 000 et 100 000 mPa.s.
Selon un autre de ses aspects, la présente invention est relative à un système précurseur bicomposant de la composition silicone décrite supra. Un tel système précurseur se présente en deux parties A et B distinctes, destinées à être mélangées pour former la composition. On s'arrange pour ne pas mettre en présence le catalyseur (III) et les espèces réactives.
Pour obtenir la composition bicomposante A-B selon l'invention, une manière avantageuse consiste à préparer tout d'abord un empâtage primaire en dispersant la charge minérale dans au moins une partie du polyorganosiloxane (I) et/ou dans au moins une partie de la résine (VII).
Cet empâtage sert de base pour obtenir une partie A résultant du mélange de ce dernier avec le reste du polyorganosiloxane (I) et/ou de la résine (VII), avec le catalyseur et éventuellement le chélate et/ou l'alcoxyde métalliques. La partie B est réalisée par mélange du réticulant (II), éventuellement l'huile allongeante (VIII), avec le silane insaturé.
Une variante peut consister à préparer : une partie A contenant une partie du composé (I), le composé (II), le silane insaturé, éventuellement le composé (VII) et éventuellement le composé (VIII) ; et une partie B contenant le reste du composé (I), le catalyseur et éventuellement le chélate et/ou l'alcoxyde métalliques.
La viscosité des parties A et B et celle de leur mélange peuvent être ajustés en jouant sur les quantités des constituants et en choisissant des polyorganosiloxanes de viscosités différentes.
Une fois mélangées l'une à l'autre, les parties A et B forment une composition prête à l'emploi, qui peut être appliquée sur le support approprié par tout moyen d'enduction convenable, par exemple par racle, en particulier par racle sur cylindre, racle en l'air et racle sur tapis.
La réticulation de la composition appliquée sur le support à revêtir peut se faire à température ambiante ou être accélérée par voie thermique (air chaud, infra-rouges, etc.). L'enduction peut éventuellement être réalisée sur les deux faces du support.
La présente invention a en particulier pour objet l'utilisation d'une telle composition pour enduire une matière textile pour bandes transporteuses, à savoir notamment des tissus de polymères thermoplastiques, notamment de polyesters saturés tels que le polytéréphtalate d'éthylène (PET). Les autres matières textiles généralement utilisées pour cette application sont le plus souvent : des tissus mixtes de PET et de polyamide (par exemple nylon 6,6) ; des tissus de polyamide aromatique ; ou des tissus de verre.
L'invention a encore pour objet les bandes transporteuses, en particulier pour le transport d'aliments, dans lesquelles le support, notamment textile, formant l'âme de la bande transporteuse est revêtu, sur une ou deux faces, d'un élastomère obtenu par réticulation d'une composition conforme à l'invention.
La présente invention va être maintenant décrite plus en détails à l'aide d'un exemple de réalisation non limitatif de la présente invention.

**EXEMPLE :**

Préparation de l'élastomère

Dans un malaxeur de laboratoire, on prépare les deux parties d'une composition pour élastomère en associant :

Partie A :

- 89 g d'une dispersion à 30 % en poids de silice colloïdale hydrophobe dans une huile diméthylpolysiloxane α,ω-divinylée ayant une viscosité dynamique de 600 mPa.s à 25°C et titrant 15 meq Vi/100 g ; la silice développe 300 $m^2$ /g ;
- 7 g d'huile diméthylpolysiloxane α,ω-divinylée qui possède une viscosité dynamique à 25°C de 1000 mPa.s et titre

12 meq Vi/100 g ;

- 3,84 g d'une charge d'hydroxyde d'aluminium de granulométrie centrée sur 1 µm et de surface spécifique d'environ 10 $m^2$ /g ;
- 0,16 d'un catalyseur de Karstedt qui contient 2 % de platine dans du divinyltétraméthyldisiloxane ;

Partie B

- 70 g d'huile diméthylpolysiloxane α,ω-dihydrogéno qui possède une viscosité dynamique à 25°C de 40 mPa.s et titre 190 meq H/100 g ;
- 29,95 g d'huile hydrogénométhylpolysiloxane α,ω-dihydrogéno qui possède une viscosité dynamique à 25 °C de 30 mPa.s et titre 250 meq H/100 g ;
- 0,05 g d'éthynylcyclohexanol.

<u>Mise en oeuvre</u>

Ces deux parties s'utilisent selon le rapport :

100 g partie A
6 g partie B

Les essais suivants sont réalisés :

. Essai A témoin tel que décrit,

puis en rajoutant aux 106 g de composition :

. Essai B 1,06 g de γ-méthacryloxypropyl triméthoxysilane,
. Essai C 1,06 g de γ-méthacryloxypropyl triméthoxylsilane + 0,53 g de titanate de n-butyle,
. Essai D 1,06 g de γ-méthacryloxypropyl triméthoxysilane + 0,53 g de méthylate de germanium,
. Essai E 1,06 g de γ-méthacryloxypropyl triéthoxysilane + 0,53 g de titanate de n-butyle,
. Essai F 1,06 g d'allyltriméthoxysilane + 0,53 g de titanate de n-butyle.

<u>Mesure de l'adhérence</u>

L'adhérence est mesurée selon un test de pelage vis-à-vis d'un tissu support représentatif. Les textiles utilisés sont en polytéréphtalate d'éthylène et ils sont constitués d'une trame monobrin et de filaments multibrins en chaîne.
Le tissu support n° 1 est caractérisé par une densité surfacique de 270 g/$m^2$.
Le tissu support n° 2 est caractérisé par une densité surfacique de 990 g/$m^2$.
Un tissu support en polyamide 6,6 est aussi considéré. Ce tissu support n° 3 est caractérisé par une densité surfacique de 160 g/$m^2$.

Préparation des éprouvettes :

Dans un moule de 2 mm de profondeur destiné à calibrer l'épaisseur de l'éprouvette finale, on dispose successivement :

* le tissu support vis-à-vis duquel on veut mesurer l'adhérence
* la composition élastomère dont on élimine l'excès en l'arasant
* un voile fin de polyamide pour éviter l'allongement de l'éprouvette lors de la mesure.

L'ensemble est conformé par pressage à froid. La composition élastomère est ensuite réticulée par chauffage 1 heure à 150°C en étuve ventilée.
Après réticulation on découpe 3 bandes de 20 mm de large dans le sandwich obtenu et on mesure la force nécessaire à peler la couche d'élastomère depuis le tissu support ; cette opération est réalisée dans une géométrie dite de pelage à 180 ° en procédant au moyen d'une machine de traction dont la traverse est mue à 50 mm/min.

Mesure d'élution

Pour estimer l'aptitude du produit à être au contact des aliments, on procède à des mesures d'élution. L'élastomère réticulé est extrait de ses composés solubles dans un appareil de Soxhlet avec de l'acétonitrile. L'extraction est effectuée en 3 fois 10 heures avec deux trempages intermédiaires de 14 heures.

Le dosage des composés solubles dans le solvant se fait par chromatographie en phase gazeuse ; la limite de détection des composés recherchés est de 2 ppm.

**Résultats :**

| . Force de pelage | | | |
|---|---|---|---|
| Force de pelage en N/mm | | | |
| | tissu 1 | tissu 2 | tissu 3 |
| A | 0,16 | | |
| B | 1,14 | 0,22 | |
| C | 1,61 | 0,98 | 0,73 |
| D | 0,71 | | |
| E | 1,21 | | |
| F | 0,56 | | |

La répétabilité appréciée par l'écart type associé à la mesure sur les trois éprouvettes découpées dans l'échantillon préparé est dans tous les cas inférieur à 0,1 N/mm.

Par ailleurs la composition B déposée sur une plaque de verre et réticulée ne peut plus être décollée.

| Elution | | |
|---|---|---|
| | Silane | Titanate de butyle |
| A | 1400 ppm | 0 |
| B | non détecté | non détecté |
| F | non détecté | non détecté |

**Revendications**

1. Utilisation, pour l'enduction d'une bande transporteuse, utilisable notamment pour le contact alimentaire, d'une composition polyorganosiloxanique du type de celles vulcanisables à froid ou à chaud par polyaddition, consistant dans le mélange formé de :

    (I) au moins un polyorganosiloxane présentant, par molécule, au moins deux groupes alcényles, en $C_2$-$C_6$ liés au silicium,
    (II) au moins un polyorganohydrogénosiloxane présentant, par molécule, au moins trois motifs siloxyles porteurs d'un atome d'hydrogène lié au silicium,
    (III) une quantité catalytiquement efficace d'au moins un catalyseur, composé d'au moins un métal appartenant au groupe du platine,
    (IV) un système promoteur d'adhérence, constitué par (IV.1) au moins un organosilanç alcoxylé contenant, par molécule, au moins un groupe hydrocarboné en $C_2$ à $C_{12}$, notamment en $C_2$ à $C_8$, comportant une double liaison éthyléniquement insaturée et optionnellement un ou plusieurs atomes d'oxygène, et éventuellement par (IV.2) au moins un chélate de métal M et/ou un alcoxyde métallique de formule générale : $M(OJ)_n$ , avec n = valence de M et J = alkyle linéaire ou ramifié en $C_1$ - $C_8$, M étant choisi dans le groupe formé par : Ti, Zr, Ge, Li, Mn, Fe, Al, Mg,
    (V) éventuellement une charge minérale,
    (VI) éventuellement au moins un modulateur de réticulation,
    (VII) éventuellement au moins une résine polyorganosiloxane, non hydroxylée et porteuse de groupements

alcényles en $C_2$-$C_6$ liés au silicium ou d'atomes d'hydrogène liés au silicium, et
(VIII) éventuellement au moins un polyorganosiloxane allongeant présentant, par molécule, deux groupements siloxyles porteurs d'un atome d'hydrogène lié au silicium.

2. Utilisation selon la revendication 1, **caractérisée en ce que** l'organosilane alcoxylé du système promoteur d'adhérence (IV) est sélectionné parmi les produits de formule générale suivante :

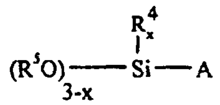

(1)

dans laquelle :

- A est soit

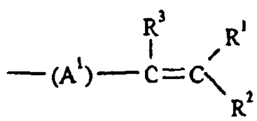

où $A^1$ est un lien valenciel ou un alkylène linéaire ou ramifié en $C_1$-$C_6$, soit

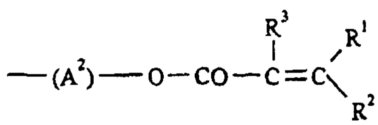

où $A^2$ est un alkylène linéaire ou ramifié en $C_1$-$C_6$, formules dans lesquelles

- $R^1$, $R^2$, $R^3$ sont des radicaux hydrogénés ou hydrocarbonés identiques ou différents et représentent, de préférence, l'hydrogène, un alkyle linéaire ou ramifié en $C_1$-$C_4$ ou un phényle éventuellement substitué par au moins un alkyle en $C_1$-$C_3$,
- $R^4$ et $R^5$ sont des radicaux identiques ou différents et représentent un alkyle en $C_1$-$C_4$ linéaire ou ramifié,
- x = 0 à 2, de préférence 0 ou 1 et plus préférentiellement encore 0.

3. Utilisation selon la revendication 2, **caractérisée en ce que**, dans la formule (1), $A^2$ est $-(CH_2)_3-$ avec $R^1$ et $R^2$ représentant un atome d'hydrogène et $R^3$ un groupe $CH_3$.

4. Utilisation selon la revendication 2, **caractérisée en ce que**, dans la formule (1), $A^1$ est $-(CH_2)-$ avec $R^1$, $R^2$ et $R^3$ représentant un atome d'hydrogène.

5. Utilisation selon l'une quelconque des revendications 1 à 4, **caractérisée en ce que** pour les chélates et/ou alcoxydes métalliques, le métal M est choisi parmi le groupe consistant en Ti, Zr, Ge, Al.

6. Utilisation selon la revendication 5, **caractérisée en ce que** le système promoteur comprend le titanate de butyle.

7. Utilisation selon l'une quelconque des revendications 1 à 6, **caractérisée en ce que** le promoteur de type (IV.1) est présent dans une concentration comprise entre 0,1 et 5 % en poids par rapport à l'ensemble des constituants de la composition.

8. Utilisation selon la revendication 7, **caractérisée en ce que** le promoteur de type (IV.1) est présent dans une concentration comprise entre 0,2 et 2 % en poids par rapport à l'ensemble des constituants de la composition.

9. Utilisation selon l'une quelconque des revendications 1 à 8, **caractérisée en ce que** le promoteur de type (IV.2) est présent dans une concentration comprise entre 0,1 et 2 % en poids par rapport à l'ensemble des constituants

de la composition.

**10.** Utilisation selon la revendication 9, **caractérisée en ce que** le promoteur de type (IV.2) est présent dans une concentration comprise entre 0,2 et 1 % en poids par rapport à l'ensemble des constituants de la composition.

**11.** Utilisation selon l'une quelconque des revendications 1 à 10, **caractérisée en ce que** les polyorganosiloxanes (I) et polyorganohydrogénosiloxanes (II) sont constitués de motifs siloxyles de formule générale :

$$Z_x R_y SiO_{\frac{4-(x+y)}{2}} \qquad (2)$$

éventuellement tous les autres motifs siloxyles étant des motifs siloxyles de formule moyenne:

$$R_n SiO_{\frac{4-n}{2}} \qquad (3)$$

formules dans lesquelles les divers symboles ont la signification suivante :

- les symboles R, identiques ou différents, représentent chacun un groupement de nature hydrocarbonée non hydrolysable, ce radical pouvant être :
  - un radical alkyle, halogènoalkyle ayant de 1 à 5 atomes de carbone et comportant de 1 à 6 atomes de chlore et/ou de fluor,
  - des radicaux cycloalkyles et halogènocycloalkyles ayant de 3 à 8 atomes de carbone et contenant de 1 à 4 atomes de chlore et/ou de fluor,
  - des radicaux aryles, alkylaryles et halogènoaryles ayant de 6 à 8 atomes de carbone et contenant de 1 à 4 atomes de chlore et/ou de fluor,
  - des radicaux cyanoalkyles ayant de 3 à 4 atomes de carbone ;
- les symboles Z représentent un atome d'hydrogène (composé II) ou un groupement alcényle en $C_2$-$C_6$ (composé I) ;
- x =un nombre entier égal à 1 ou 2 ;
- y = un nombre entier égal à 0, 1 ou 2 ;
- la somme x + y est comprise entre I et 3 ;
- n = un nombre entier égal à 0, 1, 2 ou 3.

**12.** Utilisation selon la revendication 11, **caractérisée en ce que** le rapport nombre de moles de fonctions Si-H apportées par (II) et éventuellement (VIII) sur le nombre de moles de fonctions alcényles apportées par (I) est compris entre 0,8 et 4.

**13.** Utilisation selon la revendication 12, **caractérisée en ce que** ce rapport est compris entre 1 et 2.

**14.** Utilisation selon l'une des revendications 11 à 13, **caractérisée en ce que** le rapport nombre de moles de fonctions Si-H apportées par (VIII) sur le nombre de moles de fonctions Si-H apportées par (II) est au plus égal à 10.

**15.** Utilisation selon la revendication 14, **caractérisée en ce que** ce rapport est compris entre 0,5 et 5.

**16.** Utilisation selon l'une quelconque des revendications 11 à 15, **caractérisée en ce que**

- les composés (I) sont des huiles linéaires diméthylpolysiloxanes $\alpha,\omega$-divinylées et
- les composés (II) sont des huiles linéaires hydrogénométhylpolysiloxanes à extrémités hydrogénodiméthylsiloxyles ou triméthylsiloxyles.

**17.** Utilisation selon l'une quelconque des revendications I à 16, **caractérisée en ce que** les composés (VIII) sont des polyorganosiloxanes essentiellement linéaires consistant dans des huiles diméthylpolysiloxanes $\alpha,\omega$-dihydrogéno.

**18.** Utilisation selon l'une quelconque des revendications 1 à 17 pour l'enduction d'un tissu de polymère thermoplastique, notamment de polyesters saturés tels que le polytéréphtalate d'éthylène (PET) ; de tissus mixtes de PET et de polyamide ; de tissus de polyamide aromatique ; ou de tissus de verre.

**19.** Bande transporteuse, en particulier pour le transport d'aliment, dans laquelle le support, notamment textile, formant l'âme de la bande transporteuse est revêtu, sur une ou deux faces, d'un élastomère obtenu par réticulation d'une composition telle que décrite dans l'une quelconque des revendications d'utilisation 1 à 18.

## Claims

**1.** Use, for coating a conveyor belt that can be used especially for contact with food, of a polyorganosiloxane composition of the type of those which can be cold-cured or heat-cured by polyaddition, consisting of the blend formed from:

(I) at least one polyorganosiloxane having, per molecule, at least two $C_2$-$C_6$ alkenyl groups linked to the silicon;
(II) at least one polyorganohydrogenosiloxane having, per molecule, at least three siloxyl units carrying a hydrogen atom linked to the silicon;
(III) a catalytically effective amount of at least one catalyst, composed of at least one metal belonging to the platinum group;
(IV) an adhesion promoter system, consisting of (IV.1) at least one alkoxylated organosilane containing, per molecule, at least one $C_2$ to $C_{12}$, especially $C_2$ to $C_8$, hydrocarbon group having an ethylenically unsaturated double bond and optionally one or more oxygen atoms, and possibly of (IV.2) at least one chelate of a metal M and/or a metal alkoxide of general formula: $M(OJ)_n$, where n = valency of M and J = $C_1$ - $C_8$ linear or branched alkyl, with M being chosen from the group formed by: Ti, Zr, Ge, Li, Mn, Fe, Al, Mg;
(V) optionally, a mineral filler;
(VI) optionally, at least one crosslinking modulator;
(VII) optionally, at least one non-hydroxylated polyorganosiloxane resin carrying $C_2$-$C_6$ alkenyl groups linked to the silicon, or hydrogen atoms linked to the silicon; and
(VIII) optionally, at least one extending polyorganosiloxane having, per molecule, two siloxyl groups carrying a hydrogen atom linked to the silicon.

**2.** Use according to Claim 1, **characterized in that** the alkoxylated organosilane of the adhesion promoter system (IV) is selected from products of the following general formula:

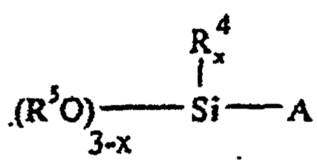

(1)

in which:

- A is either

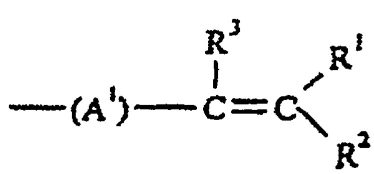

where $A^1$ is a valency bond or a $C_1$-$C_6$ linear or branched alkylene,
or

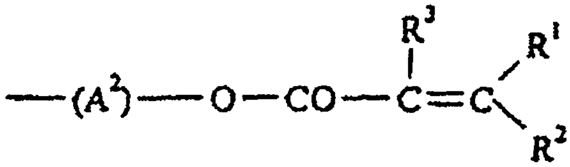

where $A^2$ is a $C_1$-$C_6$ linear or branched alkylene, in which formulae:

- $R^1$, $R^2$, $R^3$ are hydrogenated or hydrocarbon radicals, which are identical or different and preferably represent hydrogen, a $C_1$-$C_4$ linear or branched alkyl or a phenyl optionally substituted with at least one $C_1$-$C_3$ alkyl;
- $R^4$ and $R^5$ are identical or different radicals and represent a linear or branched $C_1$-$C_4$ alkyl; and
- x = 0 to 2, preferably 0 or 1 and even more preferably 0.

**3.** Use according to Claim 2, **characterized in that**, in formula (1), $A^2$ is $-(CH_2)_3-$, where $R^1$ and $R^2$ represent a hydrogen atom and $R^3$ represents a $CH_3$ group.

**4.** Use according to Claim 2, **characterized in that**, in formula (1), $A^1$ is $-(CH_2)-$, where $R^1$, $R^2$ and $R^3$ represent a hydrogen atom.

**5.** Use according to any one of Claims 1 to 4, **characterized in that**, in the case of the metal chelates and/or alkoxides, the metal M is chosen from the group consisting of Ti, Zr, Ge and A1.

**6.** Use according to Claim 5, **characterized in that** the promoter system comprises butyl titanate.

**7.** Use according to any one of Claims 1 to 6, **characterized in that** the promoter of type (IV.1) is present with a concentration of between 0.1 and 5% by weight with respect to all of the constituents of the composition.

**8.** Use according to Claim 7, **characterized in that** the promoter of type (IV.1) is present with a concentration of between 0.2 and 2% by weight with respect to all of the constituents of the composition.

**9.** Use according to any one of Claims 1 to 8, **characterized in that** the promoter of type (IV.2) is present with a concentration of between 0.1 and 2% by weight with respect to all of the constituents of the composition.

**10.** Use according to Claim 9, **characterized in that** the promoter of type (IV.2) is present with a concentration of between 0.2 and 1% by weight with respect to all of the constituents of the composition.

**11.** Use according to any one of Claims 1 to 10, **characterized in that** the polyorganosiloxanes (I) and polyorganohydrogenosiloxanes (II) consist of siloxyl units of general formula:

$$Z_xR_ySiO_{\frac{4-(x+y)}{2}} \qquad (2)$$

optionally, all the other siloxyl units being siloxyl units of average formula:

$$R_nSiO_{\frac{4-n}{2}} \qquad (3)$$

in which formulae the various symbols have the following meaning:

- the symbols R, which are identical or different, each represent a group of the non-hydrolysable hydrocarbon kind, this radical possibly being:
  * an alkyl or haloalkyl radical having from 1 to 5 carbon atoms and containing from 1 to 6 chlorine and/or fluorine atoms,
  * cycloalkyl and halocycloalkyl radicals having from 3 to 8 carbon atoms and containing from 1 to 4 chlorine

and/or fluorine atoms,
- * aryl, alkylaryl and haloaryl radicals having from 6 to 8 carbon atoms and containing from 1 to 4 chlorine and/or fluorine atoms,
- * cyanoalkyl radicals having from 3 to 4 carbon atoms;

- the Z symbols represent a hydrogen atom (compound II) or a $C_2$-$C_6$ alkenyl group (compound I);
- X = an integer equal to 1 or 2;
- y = an integer equal to 0, 1 or 2;
- the sum x + y is between 2 and 3; and
- n = an integer equal to 0, 1, 2 or 3.

**12.** Use according to Claim 11, **characterized in that** the ratio of the number of moles of Si-H functional groups provided by (II) and optionally (VIII) to the number of moles of alkenyl functional groups provided by (I) is between 0.8 and 4.

**13.** Use according to Claim 12, **characterized in that** this ratio is between 1 and 2.

**14.** Use according to one of Claims 11 to 13, **characterized in that** the ratio of the number of moles of Si-H functional groups provided by (VIII) to the number of moles of Si-H functional groups provided by (II) is at most equal to 10.

**15.** Use according to Claim 14, **characterized in that** this ratio is between 0.5 and 5.

**16.** Use according to any one of Claims 11 to 15, **characterized in that**:

- the compounds (I) are linear α, ω- divinylated dimethylpolysiloxane oils; and
- the compounds (II) are linear hydrogenomethylpolysiloxane oils having hydrogenodimethylsiloxyl or trimethylsiloxyl end groups.

**17.** Use according to any one of Claims 1 to 16, **characterized in that** the compounds (VIII) are essentially linear polyorganosiloxanes consisting of α,ω-dihydrogenodimethylpolysiloxane oils.

**18.** Use according to any one of Claims 1 to 17 for coating a fabric made of a thermoplastic polymer, especially of saturated polyesters such as polyethylene terephthalate (PET); mixed PET/polyamide fabrics; aromatic polyamide fabrics; or glass fabrics.

**19.** Conveyor belt, in particular for conveying food, in which the backing, especially a fabric backing, forming the core of the conveyer belt is coated, on one or both sides, with an elastomer obtained by the crosslinking of a composition as described in any one of the Use Claims 1 to 18.

**Patentansprüche**

**1.** Verwendung einer Polyorganosiloxan-Zusammensetzung von dem Typ, der bei Kälte oder bei Wärme durch Polyaddition vulkanisiert, für das Beschichten eines Transportbandes, das insbesondere für den Kontakt mit Nahrungsmitteln vorgesehen ist, wobei die Zusammensetzung aus einer Mischung besteht, die gebildet wird von:

(I) mindestens einem Polyorganosiloxan, das pro Molekül mindestens zwei Gruppen Alkenyl mit 2 bis 6 Kohlenstoffatomen aufweist, gebunden an das Silicium,
(II) mindestens einem Polyorganohydrogensiloxan, das pro Molekül mindestens drei Struktureinheiten Siloxyl aufweist, die ein an das Silicium gebundenes Wasserstoffatom tragen,
(III) einer katalytisch wirksamen Menge von mindestens einem Katalysator, einer Verbindung von mindestens einem aus der Platingruppe stammenden Metall,
(IV) einem Haftpromotor-System, bestehend aus (IV.1) mindestens einem alkoxylierten Organosilan, das pro Molekül mindestens eine Kohlenwasserstoff-Gruppe mit 2 bis 12 Kohlenstoffatomen, insbesondere 2 bis 8 Kohlenstoffatomen, enthält und eine ethylenisch ungesättigte Doppelbindung sowie optional ein oder mehrere Sauerstoffatome umfaßt, und gegebenenfalls aus (IV.2) mindestens einem Chelat des Metalls M und/oder einem metallischen Alkoxid der allgemeinen Formel $M(OJ)_n$, mit n = Valenz von M und J = linearem oder verzweigtem Alkyl mit 1 bis 8 Kohlenstoffatomen, wobei M aus der durch Ti, Zr, Ge, Li, Mn, Fe, Al, Mg gebildeten

Gruppe gewählt wird,
(V) gegebenenfalls einem mineralischen Füllstoff,
(VI) gegebenenfalls einem Vernetzungs-Modulator,
(VII) gegebenenfalls mindestens einem Polyorganosiloxan-Harz, das nicht hydroxyliert ist und an das Silicium gebundene Grupper Alkenyl mit 2 bis 6 Kohlenstoffatomen oder an das Silicium gebundene Wasserstoffatom trägt, und
(VIII) gegebenenfalls mindestens einem verlängernden Polyorganosiloxan, das pro Molekül zwei Gruppen Siloxyl aufweist, die ein an das Silicium gebundenes Wasserstoffatom tragen.

**2.** Verwendung nach Anspruch 1, **dadurch gekennzeichnet, daß** das alkoxylierte Organosilan des Haftpromotor-Systems (IV) ausgewählt wird unter den Produkten der allgemeinen Formel (1)

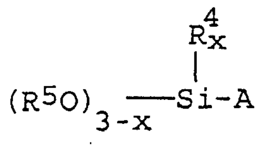

(1)

in der

- A entweder

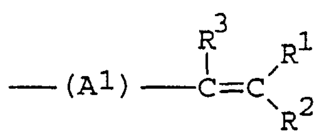

ist, worin $A^1$ eine Valenzbindung oder ein lineares oder verzweigtes Alkylen mit 1 bis 6 Kohlenstoffatomen darstellt, oder

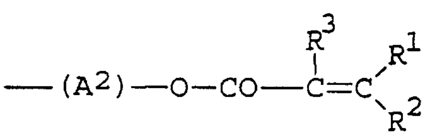

bedeutet, worin $A^2$ ein lineares oder verzweigtes Alkylen mit 1 bis 6 Kohlenstoffatomen darstellt, wobei in den Formeln

- $R^1$, $R^2$ und $R^3$ gleiche oder verschiedene Wasserstoff-Reste oder Kohlenwasserstoff-Reste sind und vorzugsweise Wasserstoff, ein lineares oder verzweigtes Alkyl mit 1 bis 4 Kohlenstoffatomen oder ein Phenyl darstellen, gegebenenfalls substituiert durch mindestens ein Alkyl mit 1 bis 3 Kohlenstoffatomen,
- $R^4$ und $R^5$ gleiche oder verschiedene Reste sind und ein lineares oder verzweigtes Alkyl mit 1 bis 4 Kohlenstoffatomen bedeuten,
- x = 0 bis 2, vorzugsweise 0 oder 1 und noch bevorzugter 0 ist.

**3.** Verwendung nach Anspruch 2, **dadurch gekennzeichnet, daß** in der Formel (1) $A^2$ gleich $-(CH_2)_3-$ ist, worin $R^1$ und $R^2$ ein Wasserstoffatom darstellen und $R^3$ eine Gruppe $CH_3$ ist.

**4.** Verwendung nach Anspruch 2, **dadurch gekennzeichnet, daß** in der Formel (1) $A^1$ gleich $-(CH_2)$ - ist, worin $R^1$, $R^2$ und $R^3$ ein Wasserstoffatom darstellen.

**5.** Verwendung nach irgendeinem der Ansprüche 1 bis 4, **dadurch gekennzeichnet, daß** in den Chelaten und/oder den metallischen Alkoxiden das Metall M aus der Gruppe gewählt wird, die aus Ti, Zr, Ge, Al besteht.

**6.** Verwendung nach Anspruch 5, **dadurch gekennzeichnet, daß** das Promotor-System Butyltitanat umfaßt.

**7.** Verwendung nach irgendeinem der Ansprüche 1 bis 6, **dadurch gekennzeichnet, daß** der Promotor vom Typ (IV.1) in einer Konzentration zwischen 0,1 und 5 Gew.-% anwesend ist, bezogen auf die Gesamtheit der Bestandteile der Zusammensetzung.

**8.** Verwendung nach Anspruch 7, **dadurch gekennzeichnet, daß** der Promotor vom Typ (IV.1) in einer Konzentration zwischen 0,2 und 2 Gew.-% anwesend ist, bezogen auf die Gesamtheit der Bestandteile der Zusammensetzung.

**9.** Verwendung nach irgendeinem der Ansprüche 1 bis 8, **dadurch gekennzeichnet, daß** der Promotor vom Typ (IV.2) in einer Konzentration zwischen 0,1 und 2 Gew.-% anwesend ist, bezogen auf die Gesamtheit der Bestandteile der Zusammensetzung.

**10.** Verwendung nach Anspruch 9, **dadurch gekennzeichnet, daß** der Promotor vom Typ (IV.2) in einer Konzentration zwischen 0,2 und 1 Gew.-% anwesend ist, bezogen auf die Gesamtheit der Bestandteile der Zusammensetzung.

**11.** Verwendung nach irgendeinem der Ansprüche 1 bis 10, **dadurch gekennzeichnet, daß** die Polyorganosiloxane (I) und die Polyorganohydrogensiloxane (II) aus Struktureinheiten Siloxyl der allgemeinen Formel (2)

$$Z_x\, R_y\, SiO_{\frac{4-(x+y)}{2}} \qquad (2)$$

bestehen und gegebenenfalls alle anderen Struktureinheiten Siloxyl solche der mittleren Formel (3)

$$R_n\, SiO_{\frac{4-n}{2}} \qquad (3)$$

sind, in der die verschiedenen Symbole die folgende Bedeutung besitzen:

- die Symbole R, gleich oder verschieden, stellen jeweils eine Gruppe von der Beschaffenheit eines nicht hydrolysierbaren Kohlenwasserstoffes dar, wobei dieser Rest sein kann:
  - ein Rest Alkyl, Halogenalkyl mit 1 bis 5 Kohlenstoffatomen und 1 bis 6 Atomen von Chlor und/oder Fluor,
  - Reste Cycloalkyl und Halogencycloalkyl mit 3 bis 8 Kohlenstoffatomen und 1 bis 4 Atomen von Chlor und/oder Fluor,
  - Reste Aryl, Alkylaryl und Halogenaryl mit 6 bis 8 Kohlenstoffatomen und 1 bis 4 Atomen von Chlor und/oder Fluor,
  - Reste Cyanoalkyl mit 3 bis 4 Kohlenstoffatomen;
- die Symbole Z stellen ein Wasserstoffatom (Verbindung II) oder eine Gruppe Alkenyl mit 2 bis 6 Kohlenstoffatomen (Verbindung I) dar;
- x ist eine ganze Zahl von 1 oder 2;
- y ist eine ganze Zahl von 0, 1 oder 2;
- die Summe x + y beträgt zwischen 1 und 3;
- n ist eine ganze Zahl von 0, 1, 2 oder 3.

**12.** Verwendung nach Anspruch 11, **dadurch gekennzeichnet, daß** das Verhältnis der Anzahl der Mole von Funktionen Si-H, eingebracht durch (II) und gegebenenfalls (VIII), zur Anzahl der Mole von Funktionen Alkenyl, eingebracht durch (I), zwischen 0,8 und 4 beträgt.

**13.** Verwendung nach Anspruch 12, **dadurch gekennzeichnet, daß** dieses Verhältnis zwischen 1 und 2 beträgt.

**14.** Verwendung nach einem der Ansprüche 11 bis 13, **dadurch gekennzeichnet, daß** das Verhältnis der Anzahl der Mole von Funktionen Si-H, eingebracht durch (VIII), zur Anzahl der Mole von Funktionen Si-H, eingebracht durch (II), höchstens 10 beträgt.

**15.** Verwendung nach Anspruch 14, **dadurch gekennzeichnet, daß** dieses Verhältnis zwischen 0,5 und 5 beträgt.

**16.** Verwendung nach irgendeinem der Ansprüche 11 bis 15, **dadurch gekennzeichnet, daß**

- die Verbindungen (I) lineare α,ω-divinylierte Dimethylpolysiloxan-Öle sind, und
- die Verbindungen (II) lineare Hydrogenmethylpolysiloxan-Öle mit Endgruppen Hydrogendimethylsiloxyl oder Trimethylsiloxyl sind.

**17.** Verwendung nach irgendeinem der Ansprüche 1 bis 16, **dadurch gekennzeichnet, daß** die Verbindungen (VIII) im wesentlichen lineare Polyorganosiloxane sind, bestehend aus α,ω-Dihydrogendimethylpolysiloxan-Ölen.

**18.** Verwendung nach irgendeinem der Ansprüche 1 bis 17 zur Beschichtung eines Gewebes aus thermoplastischem Polymer, insbesondere gesättigten Polyestern wie Polyethylenterephthalat (PET); gemischten Geweben von PET und Polyamid; Geweben von aromatischem Polyamid oder Glasgeweben.

**19.** Transportband, insbesondere für den Transport von Nahrungsmitteln, bei dem der insbesondere textile Träger, der die Seele des Transportbandes bildet, auf einer oder auf beiden Seiten mit einem Elastomer beschichtet ist, das durch Vernetzung einer Zusammensetzung wie in irgendeinem der Verwendungsansprüche 1 bis 18 beschrieben erhalten wird.